Europäisches Patentamt

European Patent Office

Office européen des brevets

(11) Veröffentlichungsnummer : **0 062 766**
**B1**

(12) **EUROPÄISCHE PATENTSCHRIFT**

(45) Veröffentlichungstag der Patentschrift :
13.06.84

(51) Int. Cl.³ : **F 04 B 15/02**

(21) Anmeldenummer : **82101885.0**

(22) Anmeldetag : **10.03.82**

(54) **Mehrwegeventil für Dickstoffpumpen.**

(30) Priorität : **04.04.81 DE 3113787**

(43) Veröffentlichungstag der Anmeldung :
**20.10.82 Patentblatt 82/42**

(45) Bekanntmachung des Hinweises auf die Patenterteilung : **13.06.84 Patentblatt 84/24**

(84) Benannte Vertragsstaaten :
**AT BE CH FR GB IT LI NL SE**

(56) Entgegenhaltungen :
**AT-B- 233 965**
**DE-A- 2 829 181**
**DE-A- 2 933 128**
**DE-B- 1 812 500**

(73) Patentinhaber : **Friedrich Wilh. Schwing GmbH**
**Postfach 247**
**D-4690 Herne 2 (DE)**

(72) Erfinder : **Schwing, Friedrich, Dipl.-Ing.**
**Rathausstrasse 126**
**D-4690 Herne 2 (DE)**

(74) Vertreter : **Herrmann-Trentepohl, Werner, Dipl.-Ing.**
**Schaeferstrasse 18**
**D-4690 Herne 1 (DE)**

Jouve, 18, rue St-Denis, 75001 Paris, France

**Beschreibung**

Die Erfindung betrifft ein Mehrwegeventil für Dickstoffpumpen gemäß dem Oberbegriff des Anspruches 1. Ein solches Mehrwegeventil ist schon aus der DE-A-2 933 128 bekannt. Derartige Mehrwegeventile steuern den Fluß des Dickstoffes aus dem Vorfüllbehälter in den ansaugenden Förderzylinder und aus dem drückenden Förderzylinder in die Förderleitung. Insbesondere bezieht sich die Erfindung auf Zweizylinderkolbenpumpen. Hierbei können Ein- und Auslaß des Schaltorganes die Öffnungen zweier miteinander verbundener, je einen Förderweg enthaltender Rohre sein, welche gemeinsam translatorisch oder schwenkend im Takt der Kolbenhübe im Gehäuse hin- und herbewegt werden. Vorzugsweise betrifft die Erfindung jedoch mehrere Ausführungsformen solcher Mehrwegeventile, deren Schaltorgane die beiden Förderwege wenigstens teilweise miteinander vereinigen ; hierbei schwenkt das Schaltorgan entweder um eine exzentrische Achse oder es wird translatorisch bewegt. Bei der Erfindung umschließt der Auslaß, welcher entsprechend der zumeist runden lichten Öffnung der Förderleitung seinerseits entsprechend abgerundete Flanken aufweist, eine Fläche, welche in allen Bewegungsphasen die Förderleitungsöffnung umschließt, so daß die Berührungsdichtung die Begrenzungskanten der Förderleitungsöffnung nicht überfährt.

Im Inneren des Schaltorganes steht der Dickstoff mit Überdruck an, welcher entsprechend dem Druck in den Förderzylindern bzw. dem statischen Druck in der Förderleitung auch im Ruhezustand der Dickstofffördersäule in aller Regel höher als der das Förderorgan im Vorfüllbehälter umgebende Dickstoffdruck ist. Die Berührungsdichtung muß daher auf ihren Gegenflächen in allen Betriebsphasen des Schaltorganes mit einem derart hohen Druck angepreßt werden, daß der Übertritt von Dickstoff aus dem Förderorgan nach außen vermieden wird. Das gilt nicht nur für die in fast allen Dickstoffen enthaltene Schlempe, sondern auch für Partikel, die abrasiv auf die abdichtenden Oberflächen wirken. Bei Beton handelt es sich vor allem um Sandkörner. Deswegen läßt man die Berührungsdichtung häufig nicht unmittelbar auf die Gehäuseinnenseite, sondern auf eine Platte wirken, welche auf der Gehäusewand angebracht ist. Dennoch wird gefordert, daß trotz der verschleißenden Partikel im Dickstoff ein beeinträchtigender Verschleiß während hinreichend langer Betriebszeiten der Pumpe nicht eintritt.

Die Erfindung geht aus von einer vorbekannten Dickstoffpumpe, die als Schaltorgan einen Schwenkkörper aufweist, welcher infolge unterschiedlicher und aufeinander abgestimmter Abstände von Einlaß und Auslaß von der Achse seiner Antriebswelle bezogen auf einen Punkt der Wellenachse wenigstens annähernd momentenfrei ist.

Der Auslaß des Schwenkkörpers hat eine nierenförmige Umrißlinie, der die abdichtende Stirnseite der Berührungsdichtung folgt, so daß diese die Förderleitungsöffnung umgibt, aber deren Kanten nicht überfährt. Bei der im Ergebnis der außerordentlich leistungsfähigen und daher vor allem für Beton und Mörtel eingesetzten Dickstoffpumpen hat sich dennoch die Dichtung des Schaltorganauslasses als erhebliches Problem herausgestellt.

Die Berührungsdichtung ist zwar als Hartdichtung ausgebildet und wirkt mit der gehärteten Oberfläche der als Verschleißschutz für das Gehäuse dienenden Platte zusammen. Dennoch gelingt es nicht, die Verschleißwirkung der harten Bestandteile im Dickstoff so weit aufzuheben, daß die geforderten Standzeiten erreicht werden. Die feinen Partikel, d. h. insbesondere die Sandkörner im Beton dringen zwischen die aufeinander abdichtenden Flächen ein und erzeugen auf diesen Riefen, die sich bei fortgesetztem Betrieb der Pumpe zusehends vergrößern und für den sehr beträchtlichen Verschleiß der Berührungsdichtung und Verschleißplatte verantwortlich sind. Dieser bedingt nicht nur einen beträchtlichen Aufwand für die erforderlichen Ersatzteile, sondern führt im Betrieb solcher Pumpen auch zu Undichtigkeiten zwischen Schwenkorganauslaß und Förderleitungsöffnung, was zu Betriebsstörungen Anlaß gibt.

Der Erfindung liegt daher die Aufgabe zugrunde, bei einem Mehrwegeventil der eingangs bezeichneten Art den Verschleiß auf ein tragbares Maß zu reduzieren und die Dichtigkeit am Schwenkorganauslaß zu gewährleisten.

Gemäß der Erfindung wird diese Aufgabe mit den kennzeichnenden Merkmalen der Ansprüche gelöst.

Indem man in einer als Berührungsdichtung ausgebildeten Weichdichtung der abdichtend wirkenden Stirnseite in jeder Bewegungsrichtung einen an der Berührungsdichtung ausgebildeten Wischer vorlaufen läßt, der mit der geglätteten und ebenen Oberfläche des Gehäuses bzw. der Schleißplatte zusammenwirkt, verhindert man das Einziehen von feinen Partikeln und vermeidet auf diese Weise die Neubildung von Riefen. Dabei macht man sich zunutze, daß die Umgebungskanten des Schaltorganauslasses die Kanten der Förderleitungsöffnung im Gehäuse bzw. der Schleißplatte nicht überfahren, indem man die Gesamtfläche, welche sich aus der Summe der beiden von der Berührungsdichtung in den beiden End- oder Schaltstellungen des Schaltorganes umschlossenen Teilflächen ergibt, jeweils ausgehend von der Förderleitungsöffnung wirkt, bevor man abdichtet, so daß der Wischer nicht durch das Zerkleinern von Partikeln, d. h. den von im Beton enthaltenen Steinen zwischen den Kanten der Öffnungen beeinträchtigt wird. Nach längeren Einsatzzeiten läßt sich diese Wirkung gegebenenfalls daran ablesen, daß die bei bestimmten Herstellungsweisen der Weichdichtung hervorgerufenen, also fertigungstechnisch bedingten Riefen in der abdichtenden Fläche der Weichdichtung in ihrer ursprünglichen Erscheinungsform noch vorhanden sind, also kein meßbarer Verschleiß an der Weichdichtung entstanden ist. Dieses Ergebnis ist umso unerwarteter, als infolge der Nieren- oder Langlochform des Schaltorganeinlasses bei der Schwenkbewegung oder der translatorischen Bewegung des Schaltorganes die Berührungsdichtung an den gekrümmten oder geraden Längskanten der Teilflächen praktisch keine Wischbewegung ausführt, die praktisch an den kurzen, zumeist halbkreisförmigen Krümmungen jeweils für die Gesamtfläche ausgeführt wird, so daß die Berührungsdichtung trotz ihres überall gleichen Querschnittes auf bestimmten Teilstrecken ihrer Erstreckung entsprechend den unterschiedlichen Wirkungen auch unterschiedlich belastet ist.

Die Dichtwirkung entsteht durch den in axiale Kräfte umgesetzten Innendruck an einer radialen Teilfläche auf der Rückseite der Weichdichtung im Flansch, wodurch die Weichdichtung in Förderrichtung au die Verschleißplatte bzw. die entsprechende Gehäusewand in Abhängigkeit vom Innendruck vorgespannt gehalten wird. Andererseits preßt der Innendruck die Weichdichtung nach außen auf eine dort ausgebildete axiale Sitzfläche. Dort wird die Weichdichtung gegen Herausquetschen von ihren Sitzen im Flansch gesichert.

Vorzugsweise bildet man gemäß der Erfindung die Weichdichtung mit entsprechend ihren unterschiedlichen Funktionen wirkenden Abstreifer und/oder Dichtungskanten oder -lippen gemäß dem Merkmal des Anspruches 2 aus. Das läßt sich mit einer im Querschnitt viereckigen Dichtung, aber auch mit entsprechend komplizierten Querschnittsformen bei Lippendichtungen erreichen.

Es hat sich bei extrem hohen Förderdrücken als zweckmäßig erwiesen, dem Auswandern der Weichdichtung zwischen die Flanschringstirnfläche und die Gegenfläche auf dem Gehäuse bzw. der Verschleißplatte mit einem äußeren Stützring entgegenzuwirken. Ein metallischer Stützring kann sich auch auf der radialen Rückseite der Weichdichtung als nützlich erweisen, weil er dem Dichtring eigene Formstabilität verleiht, wordurch sich der innere Vorsprung des Flansches erübrigt, der sonst für den Saugbetrieb erforderlich ist.

Gemäß einer anderen Ausführungsform der Erfindung kann man zwischen der Weichdichtung und der radialen Flanschfläche einen Sitzring vorsehen, auf dem die radiale Sitzfläche und eine innenliegende, axiale Unterstützungsfläche für die Weichdichtung ausgebildet sind. Ein solcher Sitzring kann das Auswechseln der Weichdichtung erheblich erleichtern.

Die Einzelheiten, weitere Merkmale und andere Vorteile der Erfindung ergeben sich aus der nachfolgenden Beschreibung mehrerer Ausführungsformen anhand der Figuren in der Zeichnung ; es zeigen

Figur 1 eine Draufsicht auf den Auslaß des Schaltorganes zur Wiedergabe des Schwenkbereiches,

Fig. 2 im Schnitt längs der Linie B-B und in abgebrochener Darstellung das Auslaßende des Schaltorganes und der diesem zugeordneten Teile im Schnitt längs der Linie B-B der Fig. 1,

Figur 3 in der Fig. 2 entsprechender Darstellung eine abgeänderte Ausführungsform der Erfindung und

Figur 4 in den Fig. 2 und 3 entsprechender Darstellung eine weiter abgeänderte Ausführungsform der Erfindung.

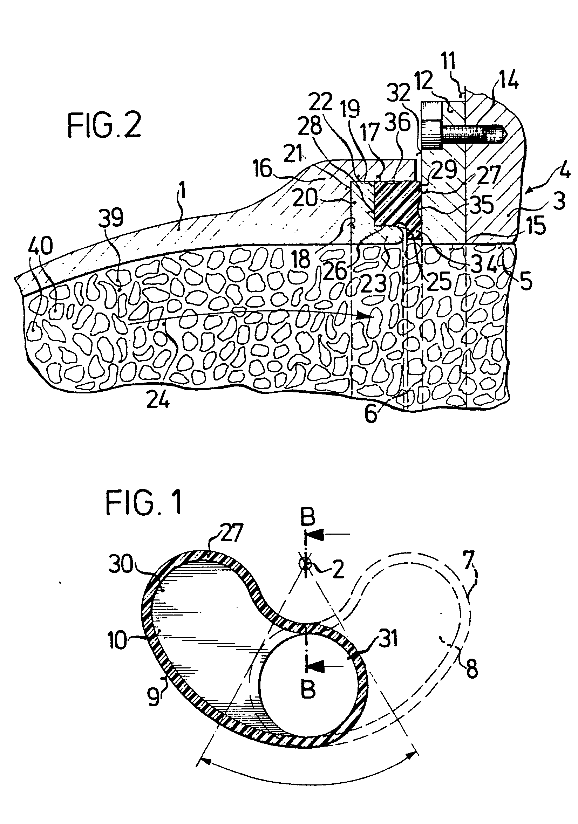

Gemäß der Darstellung der Fig. 1 schwenkt ein Schaltorgan 1 mit Hilfe einer nicht dargestellten Welle, an der es über einen Arm befestigt ist, um eine geometrische Achse, die bei 2 in Fig. 1 wiedergegeben ist. Der Schwenkwinkel ist durch den Doppelpfeil wiedergegeben. Das Schaltorgan bildet einen Schwenkkörper, der eine in einer Wand 3 (Fig. 2) eines Gehäuses 4 ausgebildete Förderöffnung 5 mit zwei nicht dargestellten Öffnungen abwechselnd verbindet, die die Abgabeöffnungen von Förderzylindern darstellen. Diese und die Austrittsöffnung sind im radialen Abstand von der Wellenachse 2 angeordnet.

Die nicht dargestellte Schwenkwelle ist axial abgestützt und der jeweilige Abstand des den Zylindern zugeordneten Schaltorganeinlasses und des Abstandes des Schaltorganauslasses, welcher bei 6 in Fig. 2 zu erkennen ist, von der Wellenachse 2 ist unterschiedlich und so gewählt, daß der Abstand des Einlasses größer als der Abstand des Auslasses ist.

Außerdem ist in dem Schaltorgan 1 die Umrißlinie des Auslasses nierenförmig, d. h. die parallelen Längskanten sind gleichförmig gekrümmt und durch kurze, konzentrisch zur umschlossenen Öffnung gekrümmte Querkanten miteinander verbunden. Für die rechte Schaltstellung ist dieser Verlauf strichpunktiert bei 7 in Fig. 1 wiedergegeben. Die mit einer Doppellinie strichpunktiert umgrenzte Fläche 8 wird in diesem Schaltzustand vom Austritt des Schwenkkörpers überdeckt, während im anderen, d. h. linken Schaltzustand die mit einer ausgezogen bei 9 wiedergegebenen Linie umgrenzte Fläche 10 überdeckt wird. Die Schaltzustände liegen jeweils am Ende der durch den Doppelpfeil in Fig. 1 wiedergegebenen Bewegung.

Wie insbesondere aus der Fig. 2 erkennbar ist, befindet sich auf der Innenseite 11 des Gehäuses 4 eine vorzugsweise polierte Platte 12, die mit Hilfe mehrerer Senkkopfschrauben 14 mit der Gehäusewand 3 verschraubt ist. Diese Platte 12 hat ihrerseits eine Aussparung 15, welche der Förderleitungsöffnung 5 im Gehäuse 4 entspricht.

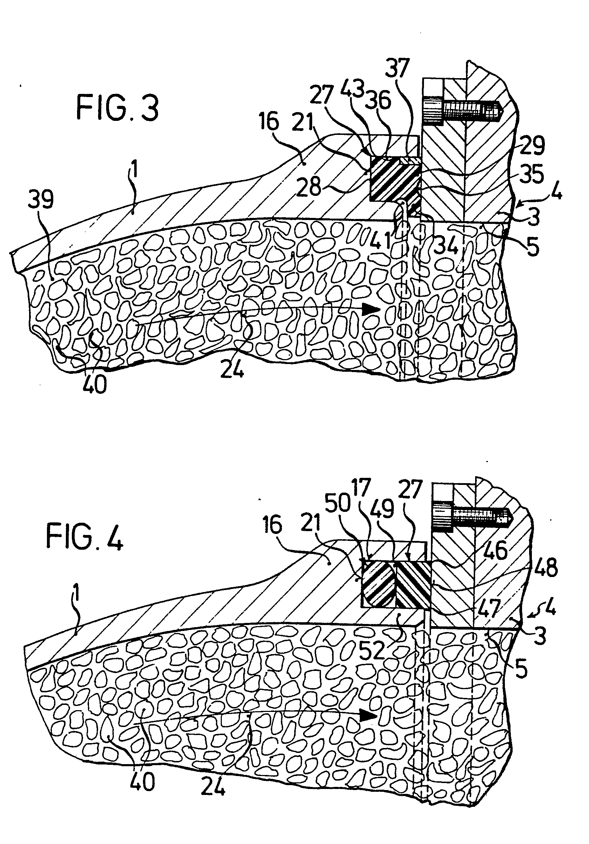

Das förderleitungsseitige Ende des Schaltorganes 1 trägt einen Flansch 16, der an seiner Stirnseite eine Aussparung 17 trägt. Die Aussparung hat eine radiale Fläche 18 und eine dazu orthogonal verlaufende axiale Fläche 19. Ein Sitzring 20 stützt sich mit je einer radialen Außenfläche 21 und einer axialen Außenfläche 22 auf den Flächen 18 und 19 der Aussparung 17 ab. Er hat einen axialen Vorsprung 23 in durch den Pfeil 24 gekennzeichneter Förderrichtung bzw. in Richtung auf die Förderleitungsöffnung 5. Mit dessen axialer Außenfläche 25 unterstützt er eine axiale Sitzfläche 26 einer Weichdichtung 27, deren radiale Sitzfläche 28 von einer entsprechenden Radialfläche des Sitzringes 20 unterstützt wird. Diese Weichdichtung 27 ist mit ihren Umrißlinien bei 9 in Fig. 1 wiedergegeben. In der Ausführungsform nach den Fig. 2 und 3 hat sie eine außen angeordnete Lippe 29, welche im Bereich der Krümmungen 30 und 31 die Flächen 10 bzw. 8 wischt, welche in beiden Ausführungsformen von der Oberfläche 32 der Platte 12 gebildet werden. Mindestens im Bereich der Flächen 8 bzw. 10, vorzugsweise aber auf der gesamten Innenfläche 32 ist die Oberfläche der Platte 12 eben ausgestaltet und geglättet. Wenn die Platte 12 weggelassen wird, kann man die Innenseite 11 des Gehäuses 3 vorzugsweise nach einer Härtung polieren. Gegebenenfalls empfiehlt es sich, mindestens die Flächen 8 und 10 zu verchromen.

Anstelle des nierenförmigen Umrisses, der bei 7 bzw. 9 in Fig. 1 wiedergegeben ist, kann man bei anderen Bauformen von Dickstoffpumpen auch eine langlochartige Umgrenzung der Flächen 8 bzw. 10 erhalten.

Während die Dichtlippe 29 radial außen angeordnet ist und nur eine Abstreiferfunktion beim Wischen der Flächen ausübt, besitzt die Weichdichtung 27 noch eine radial innere Dichtlippe 34, welche ihrerseits als Abstreifer, aber auch als Dichtung funktioniert. Gemäß der Darstellung in den Fig. 2 und 3 ist die Weichdichtung 27 in ihrem Einbauzustand wiedergegeben, in der die Lippen 29 und 34 infolge der Einbauvorspannung der Weichdichtung 27 bereits abgeflacht sind. Erkennbar sind aber die Hohlkehlen 35, 36, welche zur Bildung der Lippen verwendet werden. Im Ausführungsbeispiel der Fig. 3 ist noch ein radial äußerer Stützring 37 vorgesehen, der aus härterem Material besteht als die Weichdichtung 27. Für diesen Stützring kommt insbesondere ein hartgestelltes, vernetztes bzw. vernetzbares, nicht dauerthermoplastisches Kunstharz (Polyolefin) in Betracht. Die Weichdichtung 27 besteht dagegen außer aus Leder vorzugsweise aus einem Elastomer, d. h. insbesondere aus einem Stoff gummiartiger Elastizität, vor allem aus natürlichem Kautschuk, Synthesekautschuk und kautschukähnlichem Werkstoff, der auch durch Einlagen bewehrt sein kann.

Das im Inneren 39 des Schaltorganes 1 befindliche Fördermedium 40 — gemäß dem Ausführungsbeispiel Beton — steht unter hohem Druck, der bei der Ausführungsform nach den Fig. 2 und 3 sich hinter der Lippe 34 in einer Hohlkehle 41 aufbaut und an der radialen Fläche 21 der Aussparung 17 des Flansches 16 bzw. der radialen Fläche des Sitzringes 20 ansteht. Dort belastet er die radiale Fläche 28 der Weichdichtung, die demgemäß in Richtung 24 bzw. in Richtung auf die Förderleitungsöffnung 5 vorgespannt wird. Dieser Druck stützt sich auf der axialen Fläche 43 der Aussparung 17 im Flansch 16 in radialer Richtung ab.

Nicht dargestellt ist ein die Formsteifigkeit verbessernder metallischer Stützring, welcher auf der radialen Fläche 28 der Weichdichtung 27 angebracht sein kann und zusammen oder auch ohne den Stützring 37 Verwendung findet.

Beim Ausführungsbeispiel nach Fig. 4 wird eine im Querschnitt viereckige Weichdichtung 27 verwendet, deren axial äußere Kante 46 als Abstreifer dient, während die axial innere Kante 47 als Abstreifer und als Dichtung Verwendung findet. Diese Kanten begrenzen die radial äußere Fläche 48 der Weichdichtung 27. Die radial innere Parallelfläche 49 dient zur Abstützung einer O-Ringdichtung 50, die sich ihrerseits auf der Radialfläche 21 der Aussparung 17 abstützt. Die Aussparung 17 bildet im Ausführungsbeispiel nach den Fig. 3 und 4 eine Baueinheit mit einem mittleren Ringflansch 52, der dem Ringflansch 23 des Sitzringes 20 entspricht.

Im Betrieb schwenkt das Schaltorgan zwischen den beiden durch den Doppelpfeil gekennzeichneten Schaltstellungen hin und her im Takt der Kolben in den beiden Förderzylindern. Die Weichdichtung 27 ist eine Berührungsdichtung, welche die ebenen und geglätteten Verschleißplatten bzw. Gehäuseoberflächen 8 und 10 mit der in Fig. 1 gezeichneten nierenförmigen Umrißlinie 7 bzw. 9 zunächst abwischt, bevor die mit dem Innendruck des Schaltorganes beaufschlagten Dichtlippen 34 bzw. Dichtkanten 29 abdichten, die sich auf den Flächen 8 bzw. 10 abstützen. Die Weichdichtung 27 hat einen überall gleichen Querschnitt, d. h. eine überall gleiche Umrißlinie und eine überall gleiche Querschnittsfläche, wenn man den Zustand vor dem Einbau betrachtet.

## Ansprüche

1. Mehrwegeventil für Dickstoffpumpen, das ein in einem Gehäuse (4) bewegliches Schaltorgan (1) aufweist, welches an einem Ende wenigstens einen vor einer oder mehreren Gehäuseöffnungen beweglichen Einlaß und am gegenüberliegenden Ende vor einer Förderleitungsöffnung (5) einen mit einer Berührungsdichtung (27) umgebenen Auslaß (6) aufweist, die eine Förderleitungsöffnung im Gehäuse und vorzugsweise in einer auf der Gehäuseinnenwand angeordneten Platte (12) in allen Zwischen- und Endstellungen des Schaltorganes umgibt, dadurch gekennzeichnet, daß die als Welichdichtung (27) mit langloch- bzw. nierenförmigem Umriß (7, 9) und mit überall gleichem Querschnitt ausgebildete Berührungsdichtung zum Wischen einer ebenen und geglätteten Verschleißplatten- bzw. Gehäuseoberfläche (8, 10) dient, und daß die mit dem Innendruck (39) des Schaltorganes (1) beaufschlagte Weichdichtung (27) nach außen mit einem den Auslaß (6) umgebenden Flansch (16) und in Förderrichtung (24) auf der gewischten Oberfläche (32) des Gehäuses bzw. der gewischten Verschleißplatte (12) abgestützt ist.

2. Mehrwegeventil nach Anspruch 1, dadurch gekennzeichnet, daß die Weichdichtung (27) eine äußere, als Abstreifer beim Wischen dienende und eine innere, als Abstreifer und als Dichtung wirkende Kante (46, 47 ; 29, 34) oder Lippe aufweist.

3. Mehrwegeventil nach einem der Ansprüche 1 oder 2, gekennzeichnet durch einen radial äußeren Stützring (37) an der Weichdichtung (27).

4. Mehrwegeventil nach einem der Ansprüche 1 bis 3, gekennzeichnet durch einen Stützring der radial hinteren Stützfläche (28) der Weichdichtung (27).

5. Mehrwegeventil nach einem der Ansprüche 1 bis 4, gekennzeichnet durch eine stirnseitige Aussparung (17) im Flansch (16) mit einer radial inneren Stützfläche (21) und einer dazu orthogonalen axial äußeren Fläche (19), sowie einem axial inneren Flanschring (52).

6. Mehrwegeventil nach Anspruch 5, dadurch gekennzeichnet, daß in der Aussparung (17) ein Sitzring (20) auf der radial inneren Fläche (18) und der axial äusseren Fläche (19) abgestützt ist, und der Sitzring eine Baueinheit mit dem axial inneren Flanschring (23) bildet.

7. Mehrwegeventil nach einem der Ansprüche 1 bis 5, dadurch gekennzeichnet, daß der Dichtring (27) mit einem O-Ring (50) axial vorgespannt ist.

## Claims

1. Multiple-way valve for slurry pumps, which comprises a switching member (1) that is moveable in a housing (4) and which comprises at one end at least one inlet that can be moved in front of one or several housing apertures, and at the opposite end, in front of a conveyor pipeline aperture (5), an outlet (6) surrounded by a sealed contact joint (27), which surrounds a conveyor pipeline aperture in the housing, and preferably in a plate (12) fitted on the inner wall of the housing, in all intermediate and terminal positions of the switching member, characterised in that the sealed contact joint is formed as a flexible seal (27), with a slot-shaped or kidney-shaped outline (7, 9), and with the same cross-section throughout, and serves to wipe a flat and polished wearing plate or housing surface (8, 10), and that the flexible seal (27) acted upon by the internal pressure (39) of the switching member (1) is supported towards the outside with a flange (16) surrounding the outlet (6) and, in the direction in which material is conveyed (24), on the wiped surface (32) of the housing or (as the case may be) on the wiped wearing plate (12).

2. Multiple-way valve in accordance with Claim 1, characterised in that the flexible seal (27) exhibits an outer edge or lip serving as a wiper during wiping, and an inner edge or lip functioning as a wiper and as a seal (46, 47 ; 29, 34).

3. Multiple-way valve in accordance with one of Claims 1 or 2, characterised by a radially external support ring (37) on the flexible seal (27).

4. Multiple-way valve in accordance with one of Claims 1 to 3, characterised by a support ring on the radially rearward support face (28) of the flexible seal (27).

5. Multiple-way valve in accordance with one of Claims 1 to 4, characterised by a frontal recess (17) in the flange (16) with a radially internal support face (21) and with an axially external face (19) orthogonal to it, as well as an axially internal shrouding ring (52).

6. Multiple-way valve in accordance with Claim 5, characterised in that in the recess (17) a seating ring (20) is supported on the radially internal face (18) and on the axially external face (19), and the seating ring forms a structural entity with the axially internal shrouding ring (23).

7. Multiple-way valve in accordance with one of Claims 1 to 5, characterised in that the sealing ring (27) is axially pre-stressed with an O-ring (50).

## Revendications

1. Soupape à plusieurs voies pour pompes de matières visqueuses, qui comprend un organe de commutation (1) mobile à l'intérieur d'une enveloppe (4), l'organe de commutation comprenant à une extrémité au moins une entrée mobile devant une ou plusieurs ouvertures de l'enveloppe, et à l'extrémité opposée et face à une ouverture (5) d'une conduite de refoulement, une sortie (6) entourée par un joint de contact (27), la sortie (6) entourant dans toutes les positions intermédiaires et terminales de l'organe de commutation une ouverture de la conduite de refoulement dans l'enveloppe et de préférence dans une plaque (12) montée sur la paroi interne de l'enveloppe, caractérisée en ce que le joint de contact constitué sous forme d'une garniture molle (27) de périphérie en forme de trou oblong ou de rognon et dont la section transversale est partout constante sert au balayage d'une plaque d'usure ou d'une surface (8, 10) de l'enveloppe, plane et polie, et en ce que la garniture molle (27) qui est soumise à la pression interne (39) de l'organe de commutation (1) est supportée vers l'extérieur par une joue (16) entourant la sortie (6) et en direction du refoulement (24) contre la surface balayée (32) de l'enveloppe ou contre la plaque d'usure balayée (12).

2. Soupape à plusieurs voies selon la revendication 1, caractérisée en ce que la garniture molle (27) comprend un bord (46, 47 ; 29, 34) ou une lèvre externe servant de racloir pendant le balayage et un élément interne de même type servant de racloir et de garniture d'étanchéité.

3. Soupape à plusieurs voies selon l'une des revendications 1 et 2, caractérisée par un anneau d'appui radial et externe (37) de la garniture molle (27).

4. Soupape à plusieurs voies selon l'une quelconque des revendications 1 à 3, caractérisée par un anneau d'appui de la surface d'appui radiale et arrière (28) de la garniture molle (27).

5. Soupape à plusieurs voies selon l'une quelconque des revendications 1 à 4, caractérisée par un évidement frontal (17) pratiqué dans la joue (16) et comprenant une surface d'appui radiale interne (21) et, en outre, une surface axiale externe orthogonale (19), de même qu'une partie annulaire axiale et interne (52) de la joue.

6. Soupape à plusieurs voies selon la revendication 5, caractérisée en ce qu'un anneau de siège (21), prévu dans l'évidement (17), s'appuie sur la surface radiale interne (18) et sur la surface axiale externe (19), et en ce que l'anneau de siège constitue un ensemble avec la partie annulaire axiale et interne (23) de la joue.

7. Soupape à plusieurs voies selon l'une quelconque des revendications 1 à 5, caractérisée en ce que l'anneau d'étanchéité (27) est soumis à une précontrainte axiale par un joint torique (50).

0 062 766

FIG.2

FIG. 1

FIG. 3

FIG. 4